# EUROPEAN PATENT APPLICATION

(11) **EP 1 993 160 A2**
(43) Date of publication of application: **19.11.2008**
(21) Application number: 08015852.0
(22) Date of filing: 13.05.2005
(51) Int. Cl.: H01M 8/12, H01M 8/02, H01M 8/24

(54) **Fuel cell device**

(30) Priority: 10.06.2004 JP 2004173070
(62) Divisional of application: 05741277.7
(71) Applicant: Nissan Motor Co., Ltd., Kanagawa 221-0023 (JP)
(72) Inventor: Kushibiki, Keiko, Kanagawa 243-0192 (JP); Nakajima, Yasushi, Kanagawa 243-0192 (JP); Satou, Fuminori, Kanagawa 243-0192 (JP); Ibuka, Shigeo, Kanagawa 243-0192 (JP)
(74) Representative: Grünecker, Kinkeldey, Stockmair & Schwanhäusser Anwaltssozietät

(57) **Abstract**

A fuel cell device comprises at least one fuel cell unit. The fuel cell unit includes a cell plate, a separator plate and fixing part. The cell plate includes a metal base and a fuel cell supported on the metal base. The separator plate faces the cell plate, the separator plate includes a flat body and an extension at least partly extending from a peripheral edge of the body. The extension includes a side wall extending from the edge of the body toward the cell plate and a joint extending from a tip of the side wall in a diametrical direction and joined to the metal base. The fixing part fixes a central part of the cell plate to a central part of the separator plate. An interior angle formed at the edge of the body of the separator plate of a unit is dependent on a position of the unit in the stack.

## Description

### TECHNICAL FIELD

The present invention relates to a fuel cell device with solid electrolytes.

### BACKGROUND ART

Japanese Unexamined Patent Application Publication No. 2002-151106 discloses a fuel cell device. The fuel cell device includes the fuel cells, separator plates. The fuel cells and separator plates are alternately stacked one upon another and spaced from one another. Manifolds are arranged through the centers of the fuel cells and separator plates in a stacking direction to fix the fuel cells and separator plates together. The periphery of each separator plate is bent and is joined to the periphery of a first face of the fuel cell, to enclose a space between the separator plate and the first face of the fuel cell.

The first face of each fuel cell receives a fuel gas via the manifolds, and a second face of the fuel cell receives an oxidizing gas from the peripheral side of the fuel cell, to generate electricity.

### DISCLOSURE OF THE INVENTION

The operating temperature of the fuel cell is very high. It is, for example, about 1000°C. To withstand such high temperatures, the fuel cell has an electrolyte made of ceramics. There is a difference in thermal expansion between the fuel cell and the separator plate. This difference in thermal expansion applies stress to the fuel cell. The stress may warp or deform the fuel cell. When the separator plate and fuel cell are directly joined together, the stress directly affects the fuel cell.

The present invention relates to a fuel cell device capable of suppressing thermal stress applied to the fuel cell.

An aspect of the present invention provides a fuel cell device having at least one unit, the unit including a cell plate, a separator plate, and a fixing part. The cell plate includes a metal base and a fuel cell with a solid electrolyte supported on the metal base. The separator plate is arranged to face the cell plate and form a gas passage between the separator plate and the cell plate. The separator plate includes a flat body and an extension extending from at least a part of the edge of the body. The extension includes a side wall extending from a peripheral edge of the body toward the cell plate and a joint extending from a tip of the side wall in a diametrical direction and joined to the metal base. The fixing part fixes a central part of the cell plate to a central part of the separator plate.

### BRIEF DESCRIPTION OF THE DRAWINGS

Fig. 1 is a sectional side view showing a fuel cell device according to a first embodiment of the present invention;
Fig. 2 is an enlarged sectional view showing a unit in the fuel cell device of Fig. 1;
Fig. 3 is an exploded perspective view showing the unit of Fig. 2;
Fig. 4 is an enlarged sectional view showing a unit in a fuel cell device according to a second embodiment of the present invention;
Fig. 5 is a perspective view showing a first modification of a cell plate of the unit according to the second embodiment;
Fig. 6 is a perspective view showing a second modification of a cell plate of the unit according to the second embodiment;
Fig. 7 is a top view showing a modification of a separator plate according to the present invention;
Fig. 8 is a sectional side view showing a fuel cell device according to a third embodiment of the present invention;
Fig. 9 is a sectional side view showing a fuel cell device according to a fourth embodiment of the present invention;
Fig. 10 is a sectional side view showing an example of a unit in a fuel cell device according to another embodiment of the present invention; and
Fig. 11 is an exploded perspective view showing the unit of Fig. 10.

### BEST MODE FOR CARRYING OUT THE INVENTION

The embodiments of the present invention will be explained with reference to the drawings.

### First embodiment

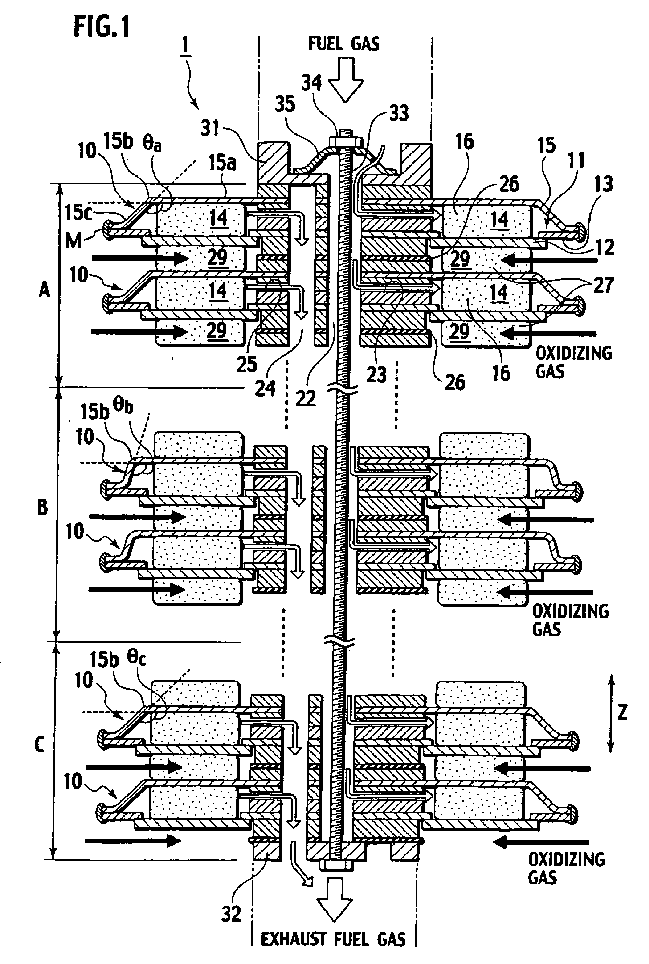

A fuel cell device according to the first embodiment of the present invention will be explained with reference to Figs. 1 to 3. The fuel cell device of the first embodiment is used as a power source for a vehicle. In Fig. 1, the fuel cell device has a fuel cell stack 1 in which a plurality (from 30 to 100 in this example) of units 10 are stacked one upon another.

The unit 10 will be explained.

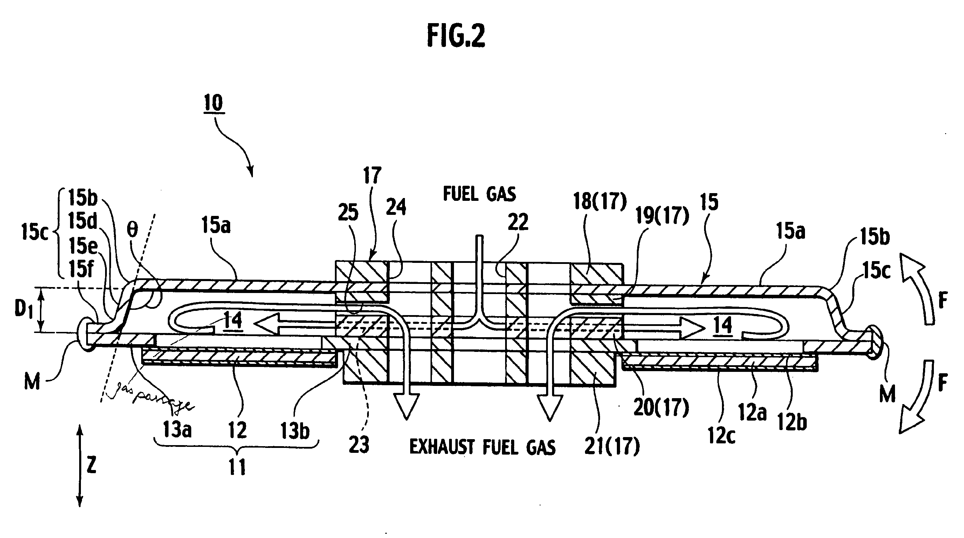

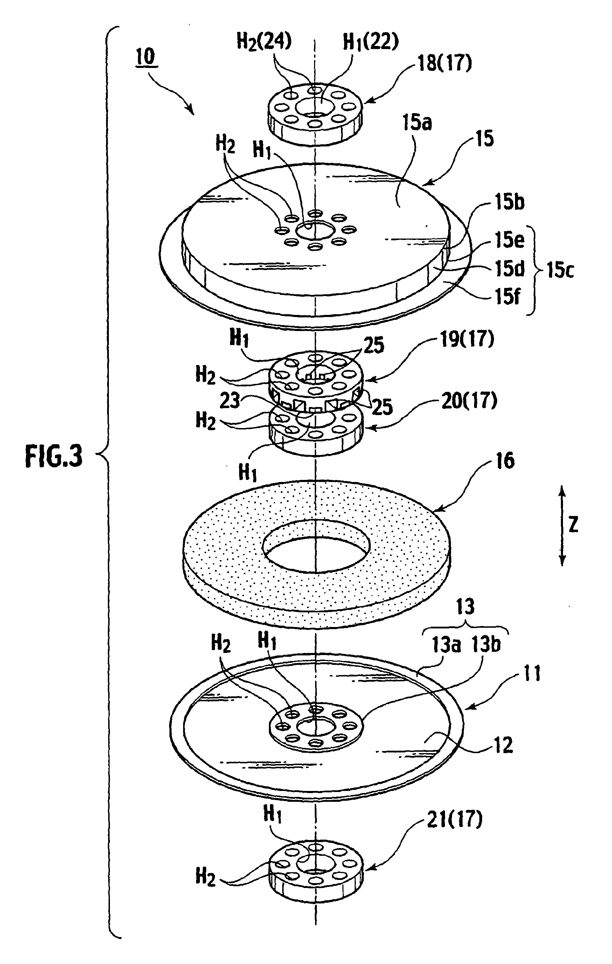

Each of the units 10 has a power generating function. The unit 10 has, as shown in Figs. 2 and 3, a disk-like cell plate 11, a disk-like separator plate 15 made of metal, a manifold 17 (comprising metal disks 18, 19, 20, and 21) serving as a fixing part to fix the separator plate 15 to the cell plate 11 at the centers thereof, and a current collector 16 (not shown in Fig. 2).

The cell plate 11 includes a fuel cell 12 and a metal base 13 supporting the fuel cell 12. The fuel cell 12 is a solid oxide fuel cell (SOFC) made of a solid electrolyte 12a, a positive electrode (anode) 12b, and a negative electrode (cathode) 12c that are layered one upon another.

The fuel cell 12 is substantially annular. The metal base 13 includes a first annular metal base 13a supporting the outer circumferential edge of the fuel cell 12 and a second annular metal base 13b supporting the inner circumference of the fuel cell 12.

The separator plate 15 faces the cell plate 11 and forms a space serving as a gas passage 14 between the cell plate 11 and the separator plate 15. In this example, the gas passage 14 conducts a fuel gas. The outer circumferential edges of the cell plate 11 and separator plate 15 are directly entirely joined together by welding M to seal the outer circumference of the space 14.

The separator plate 15 includes a flat body 15a and an extension 15c extending from the entire edge 15b of the body 15a. The extension 15c is bent in an L-shape by pressing. The L-shaped extension 15c includes a side wall 15d extending from the edge 15b toward the cell plate 11 in a stacking direction Z and a joint 15f extending from a tip 15e of the side wall 15d in a diametrical direction (an outward direction in this example). The joint 15f is directly joined to the outer circumferential edge of the metal base 13.

In Fig. 3, the manifold 17 (the metal disks 18 to 21), metal base 13b, and separator plate 15 each have a large center through hole H1 and small through holes H2, the through holes H2 being formed around the through hole H1 at regular intervals in a circumferential direction. In Fig. 2, the through hole H I forms a gas supply passage 22 extending vertically along the stacking direction Z, and the through holes H2 form gas discharge passages 24 vertically extending along the stacking direction Z. The gas supply passage 22 communicates through diametrical passages 23 with the gas passage 14. The gas discharge passages 24 communicate through diametrical passages 25 with the gas passage 14.

A gas passing through the gas passage 14 in the unit 10 shown in Fig. 2 flows, in order, through the passages 22, 23, 14, 25, and 24.

### Fuel cell stack

In Fig. 1, a plurality of the units 10 are stacked to form the fuel cell stack 1, which is fastened from both sides with a fastening device. The fastening device includes end plates 31 and 32, a bolt 33, a nut 34, and a washer 35. Between the adjacent units 10, an insulator 26 and a current collector 27 are interposed. The insulator 26 is interposed between the manifolds 17 of the adjacent units 10. The current collector 27 is located in a space 29 formed between the adjacent units 10 and is in contact with the fuel cell 12.

The supply of a fuel gas and an oxidizing gas in the fuel cell stack I will be explained.

In Fig. 1, the fuel gas is supplied from a first end (top end in Fig. 1) of the fuel cell stack 1 to the gas supply passage 22. From the passage 22, the fuel gas flows through the passages 23 into the gas passage 14 of each unit 10 and to the positive electrode of the fuel cell 12. Thereafter, the fuel gas flows through the passages 25 into the passages 24 and is discharged from a second end (bottom end in Fig. 1) of the fuel cell stack 1.

In Fig. 1, the oxidizing gas is supplied from the peripheral side of the fuel cell stack 1 into each space 29 between the adjacent units 10 and to the negative electrode of each fuel cell 12.

### Resistance against thermal stress

Generally, a fuel cell stack with solid oxide fuel cells (SOFCs) has a large temperature difference (for example, about 1000°C) between an operative state and an inoperative state. The fuel cell stack rapidly heats up when activated and rapidly cools down when inactive. To protect the fuel cells 12 from thermal stress caused by such temperature difference, each fuel cell 12 must have a structure resistive to large thermal stresses.

The first embodiment of the present invention employs materials having substantially the same thermal expansion coefficient for the separator plate 15 and fuel cell 12. The fuel cell 12 and separator plate 15 may have the same thermal expansion coefficient at a certain temperature. It is difficult, however, to completely match the thermal expansion of the fuel cell 12 made of ceramics with that of the separator plate 15 made of metal for an entire range of operating temperatures. In the range of operating temperatures, the fuel cell 12 and separator plate 15 unavoidably have a thermal expansion difference.

The central part of the cell plate 11 is fixed through the manifold 17 to the central part of the separator plate 15, and therefore, force created in the stacking direction Z by the thermal expansion difference hardly affects the central part of the cell plate 11. On the other hand, the outer circumferential edge of the cell plate 11 can be easily affected by force F (indicated with arrows in Fig. 2) from the extension 15c of the separator plate 15 due to the thermal expansion difference between the cell plate 11 and the separator plate 15. If the force F acting in the stacking direction Z occurs along the outer circumferential edge of the separator plate 15, it will warp or deform the cell plate 11. The first embodiment of the present invention employs a structure that prevents the warping or deforming stress from affecting the fuel cell 12. More precisely, the first embodiment makes the separator plate 15 thinner than the metal base 13, so that the separator plate 15 may easily bend without bending the metal base 13. Namely, the separator plate 15 deforms to absorb the thermal expansion difference between the separator plate 15 and the fuel cell 12, thereby preventing the warping or deforming stress from being applied to the fuel cell 12 installed on the metal base 13.

For example, the metal base 13 has a thickness in the range of 500 µm to 100 µm , and the separator plate 15 has a thickness in the range of 300 µm to 10 µm. The thickness of the fuel cell 12 is about 100 µm. If the fuel cell 12 is a solid electrolyte supported cell, the thickness thereof is about 100 µm. If the fuel cell 12 is an electrode (anode or cathode) supported cell, the thickness thereof is equal to or less than 500 µm.

To protect the fuel cell 12 from thermal stress that may warp or deform the fuel cell 12, the structure according to the first embodiment employs additional techniques. Namely, the extension 15c of the separator plate 15 has a special shape. An interior angle θ of the edge 15b between the body 15a and the side wall 15d of the separator plate 15 is specially selected.

In Figs. 1 and 2, the interior angle θ is an obtuse or acute angle other than 90°. If the interior angle θ is 90°, the extension 15c of the separator plate 15 hardly deforms with thermal expansion. Then, the thermal expansion will deform the metal base 13. If the interior angle θ is an obtuse or acute angle excluding 90°, the L-shaped extension 15c of the separator plate 15 easily deforms with thermal expansion to absorb a force that may deform the metal base 13. If the interior angle θ is an obtuse angle, a preferable range of the angle is 90°< θ ≦ 150°. If the interior angle θ is greater than 150°, the extension 15c will be excessive in a diametrical direction and decrease efficiency of the diametrical space. A more preferable range for the interior angle θ is 94°≦ θ ≦ 150°. In this range, the L-shaped extension 15c more easily deforms than in the range of 90°< θ < 94°.

A second technique to improve resistance to thermal stress according to the first embodiment is to change the interior angle θ depending on a stacked position as shown in Fig. 1. Properly selecting the shape of the extension 15c of the separator plate 15 according to the temperature characteristics of a stacked position improves the resistance of the fuel cell stack 1 against thermal stress.

Generally, the larger the difference of the interior angle θ from 90°, the greater the stress absorbing capability and the poorer the flatness of the separator plate 15. On the other hand, the smaller the difference of the interior angle θ from 90°, the poorer the stress absorbing capability and the better the flatness of the separator plate 15.

Accordingly, the first embodiment selects an obtuse angle with a large difference from 90° as an interior angle θ a for an upper layer A and as an interior angle θc for a lower layer C in the fuel cell stack 1, and an acute angle close to 90° as an interior angle θ b for an intermediate layer B. The upper layer A and lower layer C involve large temperature variations because they are on the outer sides of the fuel cell stack I where the influence of the oxidizing gas is large. Accordingly, the first embodiment provides the upper and lower layers A and C with a better stress absorbing ability. On the other hand, the intermediate layer B involves small temperature variations because it is inside the fuel cell stack 1 where the influence of the oxidizing gas is small. Accordingly, the first embodiment provides the intermediate layer B that is flatter than layers A and C. As a result, the fuel cell device of the first embodiment can achieve both the stress absorbing ability and stack stability.

In the upper layer A that is on the upstream side of a fuel gas flow in the stacking direction Z, the concentration of the fuel gas is high. Accordingly, the temperature of the upper layer A is more influenced by variations in the flow rate of the fuel gas than the temperatures of the intermediate layer B and lower layer C that are on the intermediate and downstream sides of the fuel gas flow. To cope with this, the present invention may further vary the interior angle θ from layer to layer.

The characteristics of the first embodiment are summarized as follows.
(1) According to the first embodiment, the disk-like metal base 13 supporting the fuel cell 12 and the domed (pot-lid-like) separator plate 15 are joined together at the peripheral edges thereof, so that the metal base 13 that is interposed between the separator plate 15 and the fuel cell 12 may decrease a thermal expansion difference between the separator plate 15 and the fuel cell 12.
(2) The joint 15f of the separator plate 15 is joined to the metal base 13 to improve rigidity. Due to this, the parts (the body 15a, corner 15b, side wall 15d, and corner 15e) of the separator plate 15 other than the joint 15f may deform to prevent thermal stress from being applied to the fuel cell 12.
(3) According to the first embodiment, the interior angle θ (θa, θb, and θ c) is an obtuse or acute angle excluding 90°. This angle makes the peripheral extension 15c of the separator plate 15 more easily deformable than when the interior angle is 90°, to easily absorb thermal stress to be applied to the fuel cell 12.
(4) According to the first embodiment, the metal base 13 and separator plate 15 are tightly joined together along the entire perimeters thereof. This configuration seals the periphery of the gas passage 14, so that reactive gasses, i.e., a fuel gas and an oxidizing gas are separately collectable. As a result, both the gasses may be circulated and reused to improve power generation efficiency.
   The structure with the perimeters of the cell plate 11 and separator plate 15 entirely joined together tends to readily apply stress to the fuel cell 12 compared with a structure that partly joins the perimeters of the cell plate 11 and separator plate 15. Because of this structure, the characteristics (1) to (3) are effective.
(5) According to the first embodiment, the separator plate 15 is thinner than the metal base 13. The separator plate 15 easily deforms. Thus, the periphery of the metal base 13 does not receive any substantial force acting in the thickness direction Z of the metal base 13. This further prevents stress from affecting the fuel cell 12. In addition, the thin separator plate 15 is advantageous in improving the stacking density of the fuel cell stack 1.
(6) According to the first embodiment, the extension 15c around the outer circumferential edge of the separator plate 15 is formed by pressing. Thus, the extension 15c is easy to form at low cost.
(7) According to the first embodiment, the metal base 13 and separator plate 15 are joined together by welding M. The metal base 13 and separator plate 15 may be joined together by welding, brazing, ultrasonic bonding, and the like. The welding is advantageous because it is easy to process. In addition, the weld metal M (filler metal welded to an objective material) functions as a beam to improve the plane rigidity of the metal base 13 and prevent the breakage of the fuel cell 12.
   The welding may be carried out by a known technique such as laser welding, resistive heat welding, and arc welding.
(8) According to the first embodiment, the fuel cell device includes a plurality of the units 10 that are stacked one upon another. Depending on the number of the units 10, the power generation capacity of the fuel cell device can be freely selected.
(9) According to the first embodiment, the insulator 26 is interposed between the joint faces of the fixing parts 17 of the adjacent units 10. Namely, only by inserting the insulator 26 between the adjacent units 10, the units 10 can be insulated from each other. This makes the assembling work of the units 10 easier.
(10) According to the first embodiment, the fixing part 17 includes the through passage 22 that is formed in the stacking direction Z to supply a reactive gas, as well as the passages 23 through which the through passage 22 communicates with the gas passage 14. This eliminates the addition of conduits for supplying the reactive gas, to thereby simplify the structure of the fuel cell device.
(11) According to the first embodiment, the interior angle θ (θa, θb, and the like) of the crank-like sectional shape of the separator plate 15 is changed according to the position of the separator plate 15 in the stack of the units 10. Namely, the shape of the separator plate 15 is properly selected according to the temperature varying characteristics of the position in the stack of the units 10, to provide the fuel cell stack I with resistance to thermal stress.
   This configuration can also improve the stress absorbing ability and stack stability of the fuel cell device.
(12) According to the first embodiment, each unit 10 in the intermediate layer B of the stack has an interior angle θb that is an obtuse or acute angle close to 90°. Each unit 10 in the upper layer A or lower layer C of the stack has an interior angle θa or θc that is an obtuse or acute angle whose differential angle from 90° is greater than that of the interior angle θb of the unit 10 in the intermediate layer B. The upper layer A and lower layer C are greatly influenced by an oxidizing gas and experience large temperature variations. Accordingly, this configuration of the first embodiment enhances the stress absorbing ability of the units 10 in the upper and lower layers A and C. On the other hand, the intermediate layer B is little influenced by an oxidizing gas and experiences small temperature variations. Accordingly, this configuration of the first embodiment enhances the plane strength of the units 10 in the intermediate layer B. Consequently, this configuration of the first embodiment achieves both the stress absorbing ability and stack stability.
(13) According to the first embodiment, the fuel cell device is used as a power source of a vehicle. The fuel cell device of this type is frequently started and stopped and the operating load thereof drastically changes depending on environmental conditions such as road conditions. As a result, the heat generation of the fuel cell device always varies widely. To cope with such thermal stress, the fuel cell device must have a durable structure, such as provided by the above characteristics.

Other embodiments of the present invention will be explained. In the following explanation, the same or like parts as those of the first embodiment are represented with the same or like reference marks to omit the explanation of the structures and effects thereof.

### Second embodiment

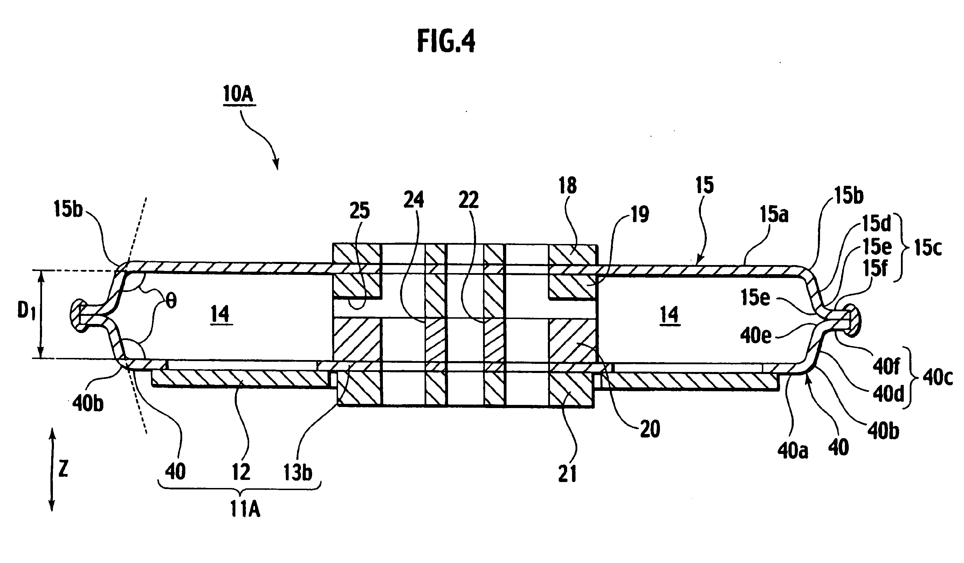

The second embodiment of the present invention will be explained with reference to Fig. 4. A unit 10A according to the second embodiment differs from that of the first embodiment in the structure of a metal base 40 of a cell plate 11A. In the first embodiment, the metal base 13 is generally flat. On the other hand, the metal base 40 of the second embodiment has, like a separator plate 15, a flat body 40a and an L-shaped extension 40c extending from an edge 40b of the body 40a. The L-shaped extension 40c includes a side wall 40d extending from the edge 40b of the body 40a toward the separator plate 15, and a joint 40f extending outwardly from a tip 40e of the side wall 40d in a diametrical direction and joined to the separator plate 15.

According to the second embodiment, the metal base 40 also has a stress absorbing structure. This further prevents a fuel cell 12 from warping or deforming, thereby further improving resistance to thermal stress.

### Modification of the second embodiment

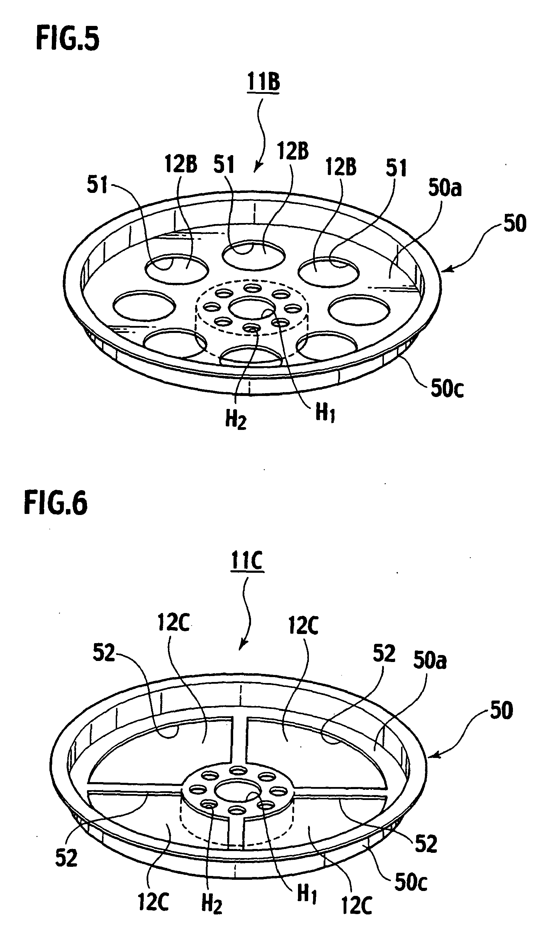

Figure 5 shows a first modification of the cell plate according to the second embodiment, and Fig. 6 shows a second modification of the cell plate according to the second embodiment.

The cell plate 11B according to the first modification shown in Fig. 5 has a metal base 50 with a flat part 50a. The flat part 50a is provided with circular openings 51 formed at regular intervals in a circumferential direction. A fuel cell 12B with a size substantially equal to that of the opening 51 of the metal base 50 is joined to the periphery of the opening 51.

The cell plate 11C according to the second modification shown in Fig. 6 has a metal base 50. The metal base 50 has openings 52 and fuel cells 12C. Unlike the first modification, the openings 52 and fuel cells 12C of the second embodiment each have a sector shape.

According to the first and second modifications, the metal base 50 supports a plurality of separate fuel cells 12B (12C). Compared with the first embodiment that forms the cell plate 11 by fixing the single annular fuel cell 12 to the metal base 13, each fuel cell 12B (12C) of the modifications is as small as to be damaged, even if the metal base 50 is deformed.

According to the present invention, each fuel cell may be formed on a metal base by a film forming technique.

### Third embodiment

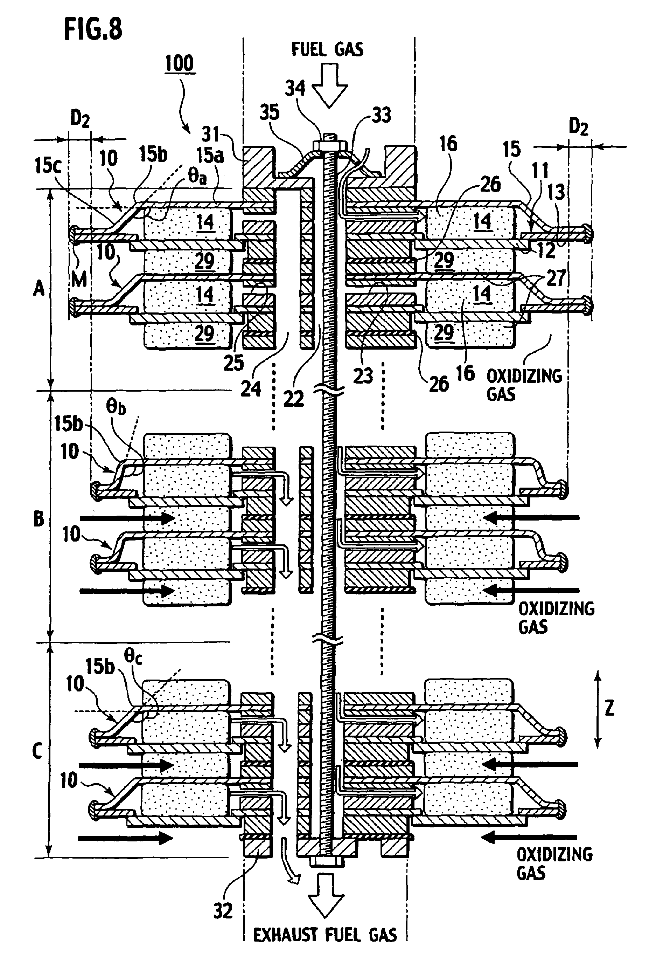

The third embodiment of the present invention will be explained with reference to Fig. 8. In a fuel cell stack 100 according to the third embodiment, a unit on the upstream side of a fuel gas flow (i.e., a unit in an upper layer A in this example) has a larger diameter than a unit in the middle part of the fuel gas flow (i.e., a unit in an intermediate layer B in this example) or a unit on the downstream side of the fuel gas flow (i.e., a unit in a lower layer C in this example), to improve thermal capacity. In this configuration, the third embodiment differs from the first embodiment.

At the start of operation, the upper layer A receives a fuel gas of high purity, and therefore, is more rapidly heated than the intermediate and lower layers B and C. Namely, at the start of operation, the upper layer receives the largest thermal stress. Accordingly, the third embodiment enlarges the thermal capacity of the upper layer A that is rapidly heated, to thereby reduce a start-up thermal shock. In addition to the effects of the first embodiment, the third embodiment further improves thermal stress absorbing performance against a fast temperature increase at the start of operation.

Under a steady operation, the lower layer C is cooled more quickly because the lower layer C receives a fuel gas of lowered purity. To avoid large temperature differences among the upper, intermediate, and lower layers A, B, and C, each fuel cell in the lower layer C may have a smaller diameter than that in the other layers A and B, to reduce the thermal capacity of the lower layer C.

### Fourth embodiment

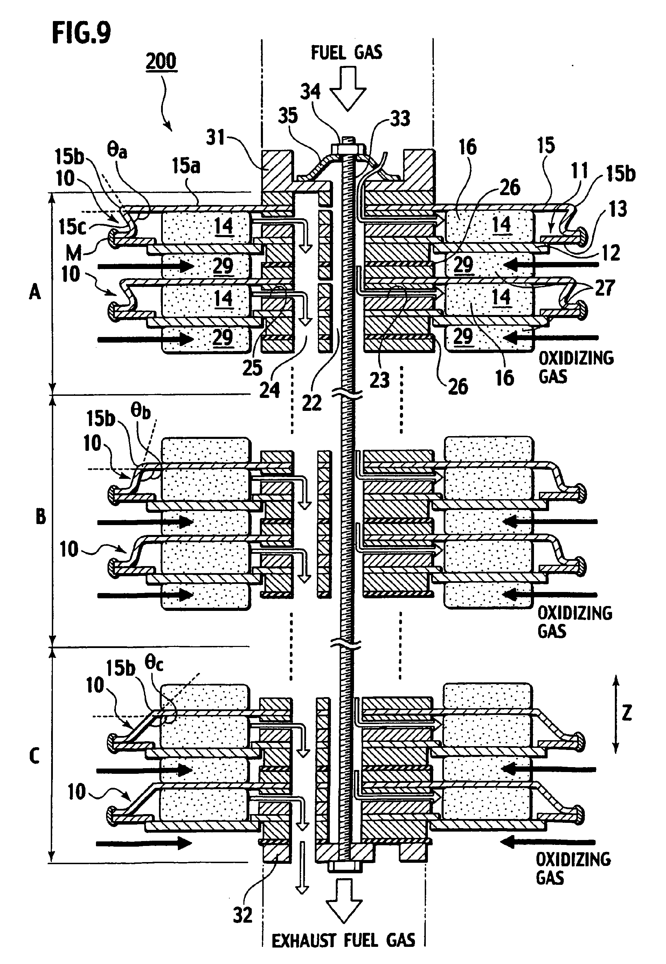

The fourth embodiment of the present invention will be explained with reference to Fig. 9. A fuel cell stack 200 of the fourth embodiment has a structure to improve thermal stress absorbing capability at the start of operation, like the third embodiment. The fourth embodiment differs from the first embodiment in that a unit on the upstream side of a fuel gas flow (i.e., a unit in an upper layer A) has an acute interior angle θa. The reason why each unit in the upper layer A is provided with the acute interior angle θa is because the acute interior angle improves thermal stress absorbing ability compared with an obtuse interior angle.

According to the fourth embodiment, a fuel gas is supplied from a first end A of the fuel cell stack I into a through passage 22. Each unit in an intermediate layer B in the fuel cell stack has an obtuse interior angle θb that is close to 90°. Each unit in a lower layer C at a second end C of the fuel cell stack has an obtuse interior angle θc that differential angle from 90° is greater than that of the interior angle θ b of each unit in the intermediate layer B. The interior angle θa of each unit in the upper layer A at the first end of the fuel cell stack is acute. In addition to the effects of the first embodiment, the fourth embodiment further improves the thermal stress absorbing capacity at the start of operation when the temperature sharply increases.

According to the first to fourth embodiments, the radius of curvature of a corner between the body and side wall of the separator plate 15 is not particularly specified. The larger this radius of curvature is the better, because the larger the radius of curvature of the corner of the separator plate 15 the greater the distribution of stress applied to the corner. It is preferable to make the radius of curvature of the corner equal to or smaller than and close to 1/2 of a distance D1 between the cell plate 11 and the separator plate 15.

According to the first to fourth embodiments, the cell plate and separator plate are entirely joined together along the perimeters thereof. According to the present invention, it is not necessary for them to be completely joined together. Namely, the extension of the separator plate may be partly extended from the peripheral edge of the separator plate. Similarly, the extension of the metal base may be partly formed.

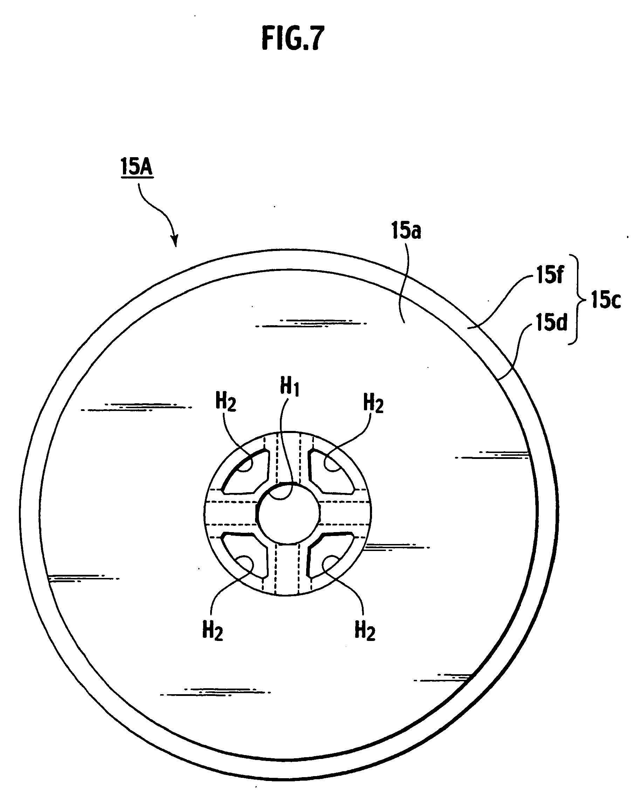

In the above-mentioned embodiments, the gas-supplying through passage H I and gas-discharging through passages H2 are each circular. According to the present invention, the through passages H1 and H2 may have a shape other than a circle, like a separator plate 15A shown in Fig. 7.

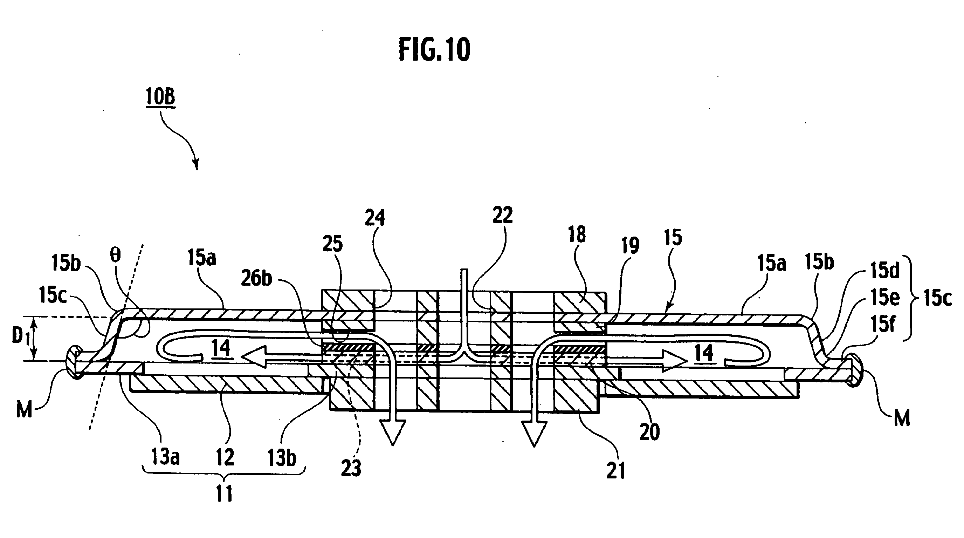

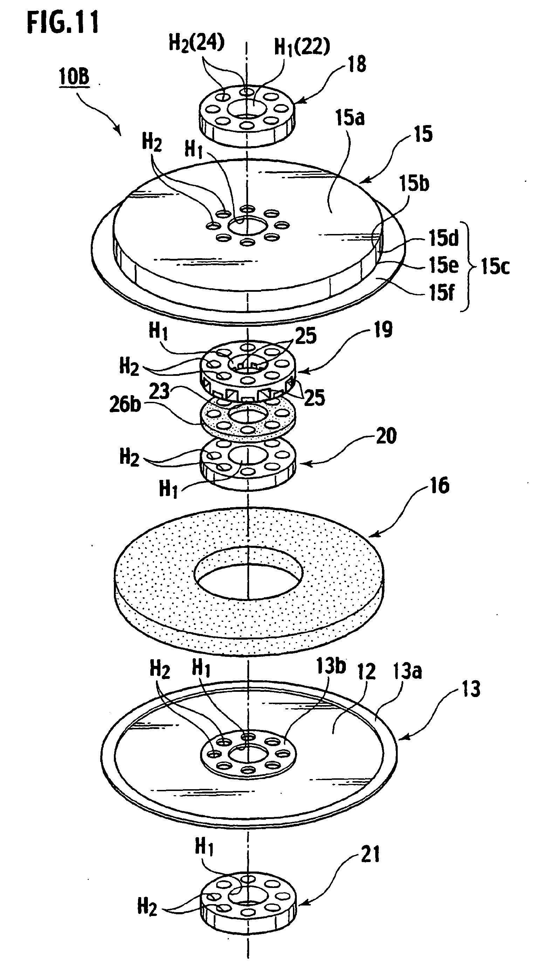

According to the above-mentioned embodiments, the insulator 26 is interposed between the adjacent units 10. According to an embodiment of the present invention shown in Figs. 10 and 11, an insulator 26b is arranged inside a unit 10B.

According to the above-mentioned embodiments, the cell plate and separator plate each have a true circular shape. The present invention is not limited to this configuration. For example, the cell plate and separator plate may each have a polygonal shape or an oval shape.

According to the above-mentioned embodiments, the joint of the separator plate is protruded outwardly in a diametrical direction. According to the present invention, the joint of the separator plate may be protruded inwardly in a diametrical direction.

According to the above-mentioned embodiments, the fuel cell is the SOFC. According to the present invention, the fuel cell may be the PAFC, PEFC or MCFC.

As explained above, a fuel cell device according to the present invention includes a disk-like metal base supporting a fuel cell, and a pot-lid-like (domed) separator plate. The peripheral edges of the metal base and separator plate are joined together. The difference in thermal expansion between the separator plate and the fuel cell is reduced by the metal base interposed therebetween. The joint of the separator plate is joined to the metal base, to improve rigidity, so that part of the separator plate other than the joint may deform to prevent force in a stacking direction Z from affecting the fuel cell.

The entire content of Japanese Patent Application No. P2004-173070 with a filing date of June 10, 2004 is herein incorporated by reference.

Although the present invention has been described above by reference to certain embodiments of the invention, the invention is not limited to the embodiments described above and covers other embodiments and modifications that will occur to those skilled in the art in light of the teachings of the invention. The scope of the invention is defined by the appended claims.

### INDUSTRIAL APPLICABILITY

A fuel cell device according to the present invention can prevent thermal stress from being applied to a fuel cell. The fuel cell device of the present invention is applicable to a variety of fuel-cell-employing apparatuses that generate high temperatures, such as fuel-cell vehicles (FCVs), industrial generators, household generators, and the like. The fuel cell device of the present invention is expected to be used for a wide range of applications.

A fuel cell device comprising: at least one fuel cell unit including: a cell plate having a substantially disk-like shape and including a metal base and a fuel cell with a solid electrolyte supported on the metal base; a separator plate facing the cell plate, so as to fo a gas passage between the separator plate and the cell plate, the separator plate having substantially a disk-like shape, and including a flat body and an extension at least partly extending from a peripheral edge of the body, the extension including a side wall extendin from the edge of the body toward the cell plate and a joint extending from a tip of the side wall in a diametrical direction and joined to the metal base; and a fixing part fixing a centra part of the cell plate to a central part of the separator plate.

The fuel cell device, wherein an interior angle formed at the edge of the body of the separator plate is obtuse or acute.

The fuel cell device, wherein the metal base has a flat body and a peripheral part at least partly protruding from an outer edge of the body, the peripheral part of the metal base including a side wall extended from the outer edge of the body toward the separator plate and a joint extending from a tip of the side wall in a diametrical direction and joined to the separator plate.

The fuel cell device, wherein the metal base and separator plate are air-tightly joined together along the entire perimeters thereof.

The fuel cell device, wherein the separator plate is thinner than the metal base.

The fuel cell, wherein the separator plate has a thickness in the range of 300 µm to 10 µm

In a preferred embodiment of the fuel cell device the metal base has a plurality of openings; and the fuel cell is disposed at each of the openings.

Further, the extension of the separator plate is formed by a press.

The metal base and separator plate of the fuel cell device are joined by welding.

Advantageously a plurality of the units are stacked one upon another in the fuel cell device.

The fuel cell device, further comprising an insulator interposed between the fixing part of adjacent units.

Still in another embodiment of the fuel cell device the fixing part has a through passage formed through the fixing part in a stacking direction, to pass at least one gas selected from the group consisting of a fuel gas and an oxidizing gas.

In the fuel cell device there is preferably an interior angle formed at the edge of the body of the separator plate of a unit is dependent on a position of the unit in the stack.

Beneficially the interior angle of each unit in an intermediate layer of the stack is obtuse or acute; and the interior angle of each unit in a side layer in the stack is obtuse or acute, a differential angle of the interior angle from 90° of the unit in the side layer being greater than that of the unit in the intermediate layer.

Favourably the fuel gas is supplied from a first end of the stack into the through passage; the interior angle of each unit in a layer close to the first end of the stack is acute; the interior angle of each unit in an intermediate layer of the stack is obtuse; and the interior angle of each unit in a layer close to a second end that is opposite to the first end of the stack is obtuse, a differential angle of the interior angle from 90°of the unit in the layer close to the second end being greater than that of the unit in the intermediate layer.

Most beneficially the fuel cell device is used as a power source for driving a vehicle

## Claims

1. A fuel cell device (1) comprising:
at least one fuel cell unit (10) including:
a cell plate (11) having a substantially disk-like shape and including a metal base (13) and a fuel cell (12) with a solid electrolyte supported on the metal base (13);
a separator plate (15) facing the cell plate (11), so as to form a gas passage (14) between the separator plate (15) and the cell plate (11), the separator plate (15) having substantially a disk-like shape, and including a flat body (15a) and an extension (15c) at least partly extending from a peripheral edge of the body, the extension (15c) including a side wall (15d) extending from the edge of the body toward the cell plate (11) and a joint (15f) extending from a tip of the side wall (15d) in a diametrical direction and joined to the metal base (13); and
a fixing part (17) fixing a central part of the cell plate (11) to a central part of the separator plate (15), wherein an interior angle formed at the edge of the body of the separator plate of a unit is dependent on a position of the unit in the stack.

2. The fuel cell device of claim 1, wherein the interior angle formed at the edge of the body of the separator plate is obtuse or acute.

3. The fuel cell device of claim 1 or 2, wherein: the interior angle of each unit in an intermediate layer of the stack is obtuse or acute; and
the interior angle of each unit in a side layer in the stack is obtuse or acute, a differential angle of the interior angle from 90° of the unit in the side layer being greater than that of the unit in the intermediate layer.

4. The fuel cell device according to one of the claims 1 to 3, wherein:
the fuel gas is supplied from a first end of the stack into the through passage;
the interior angle of each unit in a layer close to the first end of the stack is acute;
the interior angle of each unit in an intermediate layer of the stack is obtuse; and
the interior angle of each unit in a layer close to a second end that is opposite to the first end of the stack is obtuse, a differential angle of the interior angle from 90°of the unit in the layer close to the second end being greater than that of the unit in the intermediate layer.

5. The fuel cell device according to one of the claims 1 to 4, wherein the metal base has a flat body and a peripheral part at least partly protruding from an outer edge of the body, the peripheral part of the metal base including a side wall extended from the outer edge of the body toward the separator plate and a joint extending from a tip of the side wall in a diametrical direction and joined to the separator plate.

6. The fuel cell device according to one of the claims 1 to 5, wherein the metal base and separator plate are air-tightly joined together along the entire perimeters thereof.

7. The fuel cell device according to one of the claims 1 to 6, wherein the separator plate is thinner than the metal base.

8. The fuel cell device according to one of the claims 1 to 7, wherein the separator plate has a thickness in the range of 300 µm to 10 µm.

9. The fuel cell device according to one of the claims 1 to 8, wherein:
the metal base has a plurality of openings; and
the fuel cell is disposed at each of the openings.

10. The fuel cell device according to one of the claims 1 to 9, wherein the extension of the separator plate is formed by a press.

11. The fuel cell device according to one of the claims 1 to 10, wherein the metal base and separator plate are joined by welding.

12. The fuel cell device according to one of the claims 1 to 11, wherein a plurality of the units are stacked one upon another.

13. The fuel cell device of claim 12, further comprising an insulator interposed between the fixing part of adjacent units.

14. The fuel cell device of claim 12, wherein the fixing part has a through passage formed through the fixing part in a stacking direction, to pass at least one gas selected from the group consisting of a fuel gas and an oxidizing gas.

15. The fuel cell device according to one of the claims 1 to 14, wherein the fuel cell device is used as a power source for driving a vehicle.
